# EUROPÄISCHE PATENTANMELDUNG

(11) **EP 0 584 537 A2**
(43) Veröffentlichungstag der Anmeldung: **02.03.1994**
(21) Anmeldenummer: 93111769.1
(22) Anmeldetag: 22.07.1993
(51) Int. Cl.: H04Q 11/04, H04Q 3/62

(54) **Kommunikationssystem zum Bilden von virtuellen Netzen zwischen privaten Kommunikationsanlagen**

(30) Priorität: 30.07.1992 DE 4225240
(71) Anmelder: SIEMENS AKTIENGESELLSCHAFT, D-80333 München (DE)
(72) Erfinder: Wegener, Karl-Franz, Dipl.-Ing., D-81476 München (DE); Stetten, Norbert, D-82319 Söcking/Starnberg (DE)

(57) **Zusammenfassung**

Beim erfindungsgemäßen Kommunikationssystem werden private Kommunikationsanlagen (PABX1, PABX2) an Teilnehmeranschlüsse (S_{O}) eines öffentlichen diensteintegrierenden Digitalnetzes (ISDN) angeschlossen. Im Sinne einer kommunikationsanlagenspezifischen Verbindungs- und Leistungsmerkmalssteuerung zwischen den Kommunikationsanlagen (PABX1, PABX2) werden die kommunikationsanlagenspezifischen Signalisierungsinformationen mit Hilfe des paketorientierten Datendienstes (DD) - vorzugsweise gemäß der Übermittlungsprozedur nach CCITT-Empfehlung X.3lB - und die Nachrichteninformationen mit Hilfe des Basisdienstes (BD) des diensteintegrierenden Digitalnetzes (ISDN) übermittelt. Durch das Verbinden der Kommunikationsanlagen (KA) über Teilnehmeranschlüsse (S_{O}) eines diensteintegrierenden Digitalnetzes (ISDN) werden virtuelle Netze zwischen privaten Kommunikationsanlagen (KA) mit minimalem zusätzlichen Aufwand - hinsichtlich Schaltungstechnik sowie Programmtechnik - gebildet.

## Beschreibung

Die Verbindung bzw. die Vermaschung von Zwei oder mehreren Kommunikationsanlagen, insbesondere privaten Nebenstellenanlagen, im Sinne des Bildens von Netzen erfolgt überwiegend entweder mit Hilfe des öffentlichen Fernsprechwählnetzes oder über festgeschaltete Verbindungen eines öffentlichen Netzes. Bei einer Verbindung bzw. Vermaschung der Kommunikationsanlagen mit Hilfe des Fernsprechwählnetzes können eine Vielzahl von Leistungsmerkmalen, für die zusätzliche Signalisierungsmaßnahmen erforderlich sind, nicht kommunikationsanlagenübergreifend realisiert werden. Im Gegensatz hierzu können bei einer Verbindung bzw. Vermaschung der Kommunikationsanlagen über festgeschaltete Verbindungen eines öffentlichen Netzes, z. B. das Direktrufnetz der Deutschen Bundespost, die zusätzlichen Signalisierungsinformationen übermittelt und dadurch alle Leistungsmerkmale kommunikationsanlagenübergreifend realisiert werden, jedoch ist der Einsatz festgeschalteter Verbindungen aufgrund erheblicher Gebühren nur bei großen Kommunikationsanlagen bzw. privaten Nebenstellenanlagen - d. h. die festgeschalteten Verbindungen sind weitgehend ausgelastet - wirtschaftlich.

Aus der DE 31 06 002 ist darüberhinaus bekannt, private Kommunikationsanlagen bzw. Nebenstellenanlagen über das Fernsprechnetz und zusätzlich über ein Paketvermittlungsnetz - ein virtuelles Netz bildend - zu verbinden bzw. untereinander zu vermaschen. Die zusätzlichen Signalisierungsinformationen - z. B. Nachwahl - werden hierbei über das Paketvermittlungsnetz und die Nachrichten, d. h. die Fernsprechsignale einschließlich der Fernsprechsignalisierung, über das Fernsprechnetz übermittelt. Der Anschluß an beide Netze, Fernsprech- und Paketvermittlungsnetz, bedeutet einen zusätzlichen erheblichen schaltungstechnischen und programmtechnischen Aufwand.

Die der Erfindung zugrundeliegende Aufgabe besteht darin, die Bildung virtueller Netze zwischen privaten Kommunikationsanlagen bzw. Nebenstellenanlagen weiter zu vereinfachen. Die Aufgabe wird durch die Merkmale des Anspruchs 1 gelöst.

Der wesentliche Aspekt des erfindungsgemäßen Kommunikationssystems ist darin zu sehen, daß die privaten Kommunikationsanlagen bzw. Nebenstellenanlagen an Teilnehmeranschlüsse eines diensteintegrierenden Digitalnetzes - in der Fachwelt als ISDN bekannt - angeschlossen werden. Hierbei werden die kommunikationsanlagenspezifischen Signalisierungsinformationen, die zwischen zwei privaten Kommunikationsanlagen im Rahmen einer kommunikationsanlagenspezifischen Verbindungs- und Leistungsmerkmalssteuerung ausgetauscht werden, im Datendienst des diensteintegrierenden Digitalnetzes übermittelt. Die Nachrichteninformationen, wie z. B. digitalisierte Sprachinformationen, Facsimileinformationen, werden mit Hilfe des Basisdienstes des diensteintegrierenden Digitalnetzes zwischen den Kommunikationsanlagen übertragen. Die Verbindungen zwischen den privaten Kommunikationsanlagen werden gemäß der Teilnehmersignalisierung des diensteintegrierenden Digitalnetzes durch die jeweiligen privaten Kommunikationsanlagen auf- bzw. abgebaut. Die wesentlichen Vorteile des erfindungsgemäßen Kommunikationssystems sind darin zu sehen, daß virtuelle Netze zwischen privaten Kommunikationsanlagen unabhängig von öffentlichen virtuellen Netzen und mit minimalem zusätzlichen Aufwand - hinsichtlich Schaltungstechnik sowie Programmen - gebildet werden können.

Die Realisierung des diensteintegrierenden Digitalnetzes erfolgt vorteilhaft gemäß den CCITT-Empfehlungen für ISDN und ein Teilnehmeranschluß ist vorteilhaft durch eine standardisierte S_{O}- oder S_{2M}- Schnittstelle gebildet - Anspruch 2. Für das diensteintegrierende Digitalnetz sind insbesondere die CCITT-Empfehlungen der I.- und Q. -Serie relevant. Innerhalb der standardisierten S_{O}- und S₂-Teil-nehmerschnittstellen ist der Datendienst im Teilnehmeranschluß durch eine die ISDN-Schnittstellen ergänzende CCITT-Schnittstelle gemäß X.3lA und insbesondere X.3lB (hinsichtlich Übermittlungsprozedur) realisierbar - Anspruch 3. Gemäß der CCITT-Empfehlung X.3lA werden die kommunikationsanlagenspezifischen Signalisierungsinformationen durch den im paketorientierten B-Kanal des Teilnehmeranschlusses des diensteintegrierenden Digitalnetzes realisierten Datendienst sowie gemäß CCITT-Empfehlung X.3lB die kommunikationsanlagenspezifischen Signalisierungsinformationen durch den im paketorientierten D- oder B-Kanal des Teilnehmeranschlusses des diensteintegrierenden Digitalnetzes realisierten Datendienst und die Nachrichteninformationen durch die in den B-Kanälen des Teilnehmeranschlusses des diensteintegrierenden Digitalnetzes realisierten Basisdienst übermittelt - Anspruch 4.

Im folgenden wird das erfindungsgemäße Kommunikationssystem anhand zweier Blockschaltbilder erläutert. Dabei zeigen
- FIG 1: in einem Blockschaltbild das erfindungsgemäße Kommunikationssystem mit zwei Kommunikationsanlagen, die über ein diensteintegrierendes Digitalnetz verbunden sind, und
- FIG 2: in einem Blockschaltbild die Anordnung der Dienste in einem Teilnehmeranschluß eines diensteintegrierenden Digitalnetz.

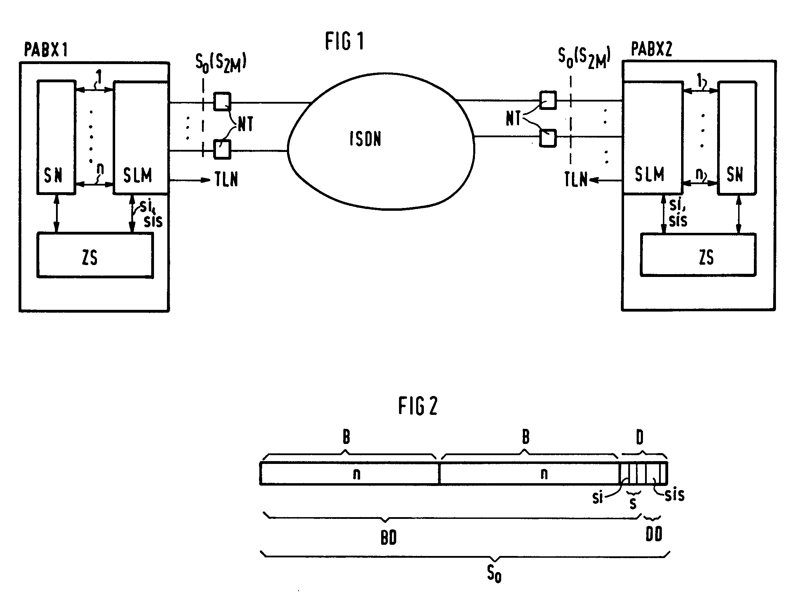

FIG 1 zeigt die Blockschaltbilder zweier privater Kommunikationsanlagen, insbesondere privater Nebenstellenanlagen PABX1, PABX2, die über ein diensteintegrierendes Digitalnetz ISDN verbunden sind. Die beiden privaten Kommunikationsanlagen PABX1, PABX2 sind repräsentativ für eine beliebige Anzahl von privaten Kommunikationsanlagen dargestellt, die über das öffentliche diensteintegrierende Digitalnetz ISDN verbunden bzw. vermascht werden. Für das Ausführungsbeispiel sei angenommen, daß die beiden privaten Kommunikationsanlagen PABX1, PABX2 gemäß der veröffentlichten europäischen Patentanmeldung, Veröffentlichungsnummer 0 347 644 Al, und das öffentliche diensteintegrierende Digitalnetz ISDN gemäß den CCITT-Empfehlungen der I.- und der Q.-Serie realisiert sind, wobei in den CCITT-Empfehlungen der I.-Serie die grundsätzlichen Strukturen und Verfahrensweisen sowie die physikalischen Eigenschaften und in den CCITT-Empfehlungen der Q.-Serie die vermittlungstechnischen Prozeduren und die Schnittstellenprozeduren für ein diensteintegrierendes Digitalnetz ISDN definiert sind.

Für das Ausführungsbeispiel sei weiterhin angenommen, daß jede Kommunikationsanlage PABX1, PABX2 mit dem diensteintegrierenden Digitalnetz ISDN über die standardisierte S_{O}-Schnittstelle S_{O} verbunden ist. Die S_{O}-Schnittstelle S_{O} ist kommunikationsanlagenseitig in den Teilnehmeranschlußeinrichtungen SLM und digitalnetzseitig in den Netzabschlußeinrichtungen NT realisiert. Die Struktur dieser S_{O}-Schnittstelle S_{O} - in der Fachwelt auch als ISDN-Basis Access Interface bekannt - ist in FIG 2 dargestellt. Die nutzbare Datenübermittlungskapazität der S_{O}-Schnittstelle S_{O} von 144 kBit/s ist in zwei B-Kanäle B von jeweils 64 kBit/s und einen D-Kanal von 16 kBit/s aufgeteilt. In den B-Kanälen B werden die Nachrichten n, z. B. digitalisierte Sprachinformationen, bitsynchron übermittelt. Im D-Kanal werden die für die Verbindungs- und Leistungsmerkmalssteuerung im diensteintegrierenden Digitalnetz ISDN erforderlichen Signalisierungsinformationen si für die beiden B-Kanäle B paketorientiert übermittelt. Dieser Bereich im D-Kanal, der zwar eine Übermittlungsrate von 16 kBit/s aufweist, jedoch nur einen Teil der Übermittlungskapazität beansprucht, ist als Signalisierungskanal S definiert. Durch die beiden B-Kanäle B und den zugeordneten Signalisierungskanal S ist der Basisdienst BD in der S_{O}-Schnittstelle S_{O} realisiert.

Des weiteren ist im D-Kanal D ein Teil der Übermittlungskapazität oder alternativ ein B-Kanal B für einen paketorientierten Datendienst DD vorgesehen. Bei diesem paketorientierten Datendienst DD können Informationen transparent mit Hilfe der in der CCITT-Empfehlung I.462 bzw. X.3lA und insbesondere X.3lB definierten Übermittlungsprozedur über den D-oder B-Kanal D, B der S_{O}-Schnittstelle S_{O}- übermittelt werden. Da üblicherweise kommunikationsanlagenspezifische Signalisierungsinformationen sis geringe Datenmengen aufweisen, ist im Ausführungsbeispiel der Datendienst DD im D-Kanal D des diensteintegrierenden Digitalnetzes ISDN gemäß CCITT-Empfehlung X.3lB vorgesehen. Alternativ, d. h. z. B. bei D-Kanal-Überlastungen oder aus wirtschaftlichen oder Realisierungsgründen, ist der Datendienst DD gemäß CCITT-Empfehlung X.3lA und X.3lB auch im B-Kanal realisierbar. Durch die Übermittlung der zusätzlichen Signalisierungsinformationen sis mit Hilfe des Datendienstes DD kann das diensteintegrierende Digitalnetz ISDN in einfachster Weise zum Bilden von virtuellen Netzen zwischen privaten Kommunikationsanlagen PABX1, PABX2 eingesetzt werden. Die Übermittlung der Nachrichten n, z. B. digitalisierte Sprachinformationen, wird im Basisdienst BD des diensteintegrierenden Digitalnetzes ISDN bewirkt, wobei der hierfür erforderliche Verbindungsauf- und -abbau durch die vorhandenen Steuerungskomponenten der Kommunikationsanlagen PABX1, PABX2 in bekannter Weise im Signalisierungskanal S des D-Kanals gesteuert wird.

In den privaten Kommunikationsanlagen PABX1, PABX2 sind die Teilnehmeranschlußeinrichtungen SLM über mehrere Verbindungen jeweils mit einem Koppelfeld SN verbunden. Sowohl das Koppelfeld SN als auch die Teilnehmeranschlußeinrichtungen SLM werden jeweils durch eine mit diesen verbundene zentrale Steuereinrichtung ZS in bekannter Weise koordiniert bzw. gesteuert. Mit Hilfe des Koppelfeldes SN werden die Nachrichten signalisierungsinformationsgemäß vermittelt. In der zentralen Steuereinrichtung ZS und in nicht dargestellten Untersteuereinheiten in den Teilnehmeranschlußeinrichtungen SLM werden die Signalisierungsinformationen si für die Steuerung der B-Kanäle B sowie die kommunikationsanlagenspezifischen Signalisierungsinformationen sis gebildet und bewertet. In den Teilnehmeranschlußeinrichtungen SLM und/oder der zentralen Steuereinrichtung ZS ist zusätzlich beispielsweise ein Programm für die Realisierung der Signalisierungs- und Übermittlungsprozedur für den paketorientierten Datendienst DD gemäß der CCITT-Empfehlung I.462 bzw. X.3lA und vorzugsweise X.3lB vorzusehen. Eine physikalische Anpassung, d. h. eine schaltungstechnische Änderung, ist hierbei nicht erforderlich. Sind mehrere S_{O}-Schnittstellen S_{O} für die Verbindung bzw. Vermaschung von privaten Kommunikationsanlagen PABX1, PABX2 vorgesehen, so können diese auch durch eine Multiplexschnittstelle S_{2M} des diensteintegrierenden Digitalnetzes ISDN realisiert werden. Diese Multiplexschnittstelle S_{2M} ist durch 30 B-Kanäle und ebenfalls einen D-Kanal gebildet. Sowohl die B-Kanäle als auch der D-Kanal weist eine multiplexe Kanalstruktur für einen Mehrfachzugang auf.

## Patentansprüche

1. Kommunikationssystem zur Bildung von virtuellen Netzen zwischen privaten Kommunikationsanlagen (PABX1, PABX2),
- bei dem jede Kommunikationsanlage (PABX1, PABX2) an zumindest einen Teilnehmeranschluß (SO) eines öffentlichen, diensteintegrierenden Digitalnetzes (ISDN) angeschlossen ist,
- bei dem im Sinne einer kommunikationsanlagenspezifischen Verbindungs- und Leistungsmerkmalssteuerung zwischen den Kommunikationsanlagen (PABX1, PABX2) kommunikationsanlagenspezifische Signalisierungsinformationen (sis) kommunikationsanlagengesteuert mit Hilfe des paketorientierten Datendienstes (DD) des diensteintegrierenden Digitalnetzes (ISDN) übermittelt werden, und
- bei dem die Übermittlung der Nachrichteninformationen (n) zwischen den Kommunikationsanlagen (PABX1, PABX2) kommunikationsanlagengesteuert mit Hilfe des Basisdienstes (BD) des diensteintegrierenden Digitalnetzes (ISDN) bewirkt wird.

2. Kommunikationssystem nach Anspruch 1,
**dadurch gekennzeichnet,**
daß das diensteintegrierende Digitalnetz (ISDN) gemäß den CCITT-Empfehlungen der I.- und der Q.-Serie ausgestaltet ist und daß der Teilnehmeranschluß (S_{O}) durch eine standardisierte S_{O}- oder S_{2M}-Schnittstelle (S_{O}, S_{2M} ) des diensteintegrierenden Digitalnetzes (ISDN) gebildet ist.

3. Kommunikationssystem nach Anspruch 2,
**dadurch gekennzeichnet,**
daß der Datendienst (DD) im Teilnehmeranschluß (S_{O}) des diensteintegrierenden Digitalnetzes (ISDN) gemäß der CCITT-Empfehlung X.3lA oder vorzugsweise gemäß X.3lB realisiert ist.

4. Kommunikationssystem nach Anspruch 3,
**dadurch gekennzeichnet,**
daß die kommunikationsanlagenspezifischen Signalisierungsinformationen (sis) durch den im paketorientierten D- oder B-Kanal (D, B) realisierten Datendienst (DD) und die Nachrichteninformationen (n) durch den in den B-Kanälen (B) realisierten Basisdienst (BD) des Teilnehmeranschlusses (S_{O}) des diensteintegrierenden Digitalnetzes (ISDN) übermittelt werden, wobei der digitalnetzgerechte Verbindungsauf- und -abbau zwischen den Kommunikationsanlagen (PABX1, PABX2) über den im Teilnehmeranschluß (S_{O}) realisierten D-Kanal (D) durch die Kommunikationsanlagen (PABX1, PABX2) gesteuert wird.
